# EUROPEAN PATENT APPLICATION

(11) **EP 2 527 988 A1**
(43) Date of publication of application: **28.11.2012**
(21) Application number: 10842878.0
(22) Date of filing: 16.09.2010
(51) Int. Cl.: G06F 13/38

(54) **METHOD AND SYSTEM FOR CONTROLLING INTER-INTEGRATED CIRCUIT BUS**

(30) Priority: 18.01.2010 CN 201010034257
(71) Applicant: ZTE Corporation, Shenzhen, Guangdong 518057 (CN)
(72) Inventor: GAO, Hong, Guangdong 518057 (CN)
(74) Representative: Novagraaf Technologies
(86) International application number: PCT/CN2010/077010
(87) International publication number: WO 2011/085595

(57) **Abstract**

The present invention discloses a method and a system for controlling an Inter-Integrated Circuit (I2C) bus. The method comprises: dividing a Serial Clock Line (SCL) signal collected from an I2C bus of a master device into a plurality of paths of signals and extending the signals to I2C buses of slave devices, by a Complex Programmable Logic Device (CPLD); judging a current state of data and determining a direction of a current Serial Data Line (SDA) signal, between the SDA signal collected from the I2C bus of the master device and the SDA signal collected from the I2C bus of the slave device. The system can reduce cost and design complexity of a single-board.

## Description

### Field of the Invention

The present invention relates to a technology of two-wired serial bus (Inter-Integrated Circuit, I2C), and in particular to a system and a method for controlling an I2C bus by using a Complex Programmable Logic Device (CPLD).

### Background of the Invention

An I2C bus is a two-wired serial bus developed by PHILIPS for connecting a microcontroller and peripheral equipment thereof. The I2C bus appears in 1980s and first applies to audio and video devices; at present, the I2C bus mainly applies to the management of server, comprising the communication of a state of a single component. For example, an administrator can query each component so as to manage the configuration of a system or acquire the function state of a component such as a power supply or a system fan. The I2C bus can monitor a plurality of parameters such as memory, hard disk, network, system temperature and the like at any time, thus the security of the system is increased and the management is more convenient.

In present Ethernet switch, router and other equipment, an I2C bus is often used to control a plurality of devices of an entire system, such as temperature sensor, power supply management module and Electrically Erasable Programmable Read-Only Memory (E2PROM). These devices are deployed in the entire system. When the devices are uniformly managed, low quality of signal might be caused due to too long line, too many devices, etc., thus the devices can not be accessed normally.

At present, some special I2C bus drive chips such as buffer or hub can be used to solve the problem of the control of the I2C bus. However, since the I2C bus drive chip belongs to hardware implementation, the application of the I2C bus drive chip would cause an increase in extra manufacturing cost. Moreover, there is no extra space placing these I2C bus drive chips on some high-density single-boards, if the I2C bus drive chips must be placed on the single-board, the design complexity of the single-board would be increased.

### Summary of the Invention

In view of the problems above, the present invention provides a system and a method for controlling an I2C bus, which control the I2C bus through a CPLD, and can reduce cost and design complexity of a single-board.

The technical solution of the present invention is realized as follows.

The present invention provides a system for controlling an Inter-Integrated Circuit (I2C) bus, comprising: a Complex Programmable Logic Device (CPLD), configured to divide a Serial Clock Line (SCL) signal collected from an I2C bus of a master device into a plurality of paths of signals and extend the signals to I2C buses of slave devices; and configured to judge a current state of data and determine a direction of a current Serial Data Line (SDA) signal, between an SDA signal collected from the I2C bus of the master device and an SDA signal from the I2C bus of the slave device.

Preferably, the CPLD further comprises: a signal collecting module, a clock distributing module and a direction control module, wherein
the signal collecting module is configured to collect the SCL signal and the SDA signal from the I2C bus of the master device using a high-frequency clock signal;
the clock distributing module is configured to extend the SCL signal collected from the I2C bus of the master device to SCL signals of I2C buses of multiple subordinate slave devices; and
the direction control module is configured to determine the direction of the current SDA signal by judging a current state of data on I2C buses of the master device and the multiple subordinate slave devices.

Preferably, when the current state of data is SDA_DIR=0, the direction of the current SDA signal is from the master device to the slave device;
or, when the current state of data is SDA_DIR=1, the direction of the current SDA signal is from the slave device to the master device.

Preferably, the CPLD further comprises: a data control module, configured to select the direction of the SDA signal according to a signal of the direction control module.

Preferably, the CPLD further comprises: a hanging preventing module, configured to distribute a clock to each subordinate slave device during a starting or resetting process of the system to enable each subordinate slave device to release the I2C bus.

The present invention also provides a method for controlling an I2C bus, comprising:
dividing an SCL signal collected from an I2C bus of a master device into a plurality of paths of signals and extending the signals to I2C buses of slave devices;
judging a current state of data and determining a direction of a current SDA signal, between an SDA signal collected from the I2C bus of the master device and an SDA signal from the I2C bus of the slave device.

Preferably, the collection comprises: collecting, by a signal collecting module, the SCL signal and the SDA signal from the I2C bus of the master device using a high-frequency clock signal.

Preferably, the step of dividing the SCL signal into a plurality of paths of signals and extending the signals to the I2C buses of the slave devices comprise: extending, by a clock distributing module, the SCL signal collected from the I2C bus of the master device to SCL signals of I2C buses of multiple subordinate slave devices.

Preferably, the step of judging the current state of data and determining the direction of the current SDA signal, between the SDA signal collected from the I2C bus of the master device and the SDA signal from the I2C bus of the slave device, comprises: determining, by a direction control module, the direction of the current SDA signal by judging a current state of data on I2C buses of the master device and the multiple subordinate slave devices; wherein
when the current state of data is SDA_DIR=0, the direction of the current SDA signal is from the master device to the slave device; or, when the current state of data is SDA_DIR=1, the direction of the current SDA signal is from the slave device to the master device.

Preferably, the method further comprises: distributing, by a hanging preventing module, a clock to each subordinate slave device during a starting or resetting process of a system to enable each subordinate slave device to release the I2C bus.

The CPLD of the present invention is configured to divide the SCL signal collected from the I2C bus of the master device into a plurality of paths of signals and extend the signals to the I2C buses of the slave devices; and configured to judge the current state of data and determine the direction of the current SDA signal, between the SDA signal collected from the I2C bus of the master device and the SDA signal from the I2C bus of the slave device.

The CPLD of the present invention belongs to software implementation, different from the I2C bus drive chip belonging to hardware implementation adopted in the conventional art, with the present invention, no extra manufacturing cost is increased, and the cost and the design complexity of a single-board can be reduced. Moreover, since the I2C devices distributed are of one-to-one correspondence, quality of signal would be greatly improved.

### Brief Description of the Drawings

Fig. 1 shows a schematic diagram of the structure in a system embodiment of the present invention;
Fig. 2 shows a schematic diagram of START and STOP states of an I2C bus in an embodiment of the present invention; and
Fig. 3 shows a diagram of an entire time sequence of an I2C bus in an embodiment of the present invention.

### Detailed Description of the Embodiments

The basic idea of the embodiments of the present invention is: a CPLD is adopted to control an I2C bus, specifically, the CPLD is adopted to divide an SCL signal collected from an I2C bus of a master device into a plurality of paths of signals, extend the signals to I2C buses of slave devices, judge a current state of data and determine a direction of a current SDA signal, between an SDA signal collected from the I2C bus of the master device and an SDA signal from the I2C bus of the slave device.

The implementation of the technical solution is described below in further detail in conjunction with the accompanying drawings.

A system for controlling an I2C bus comprises: a CPLD, configured to divide an SCL signal collected from an I2C bus of a master device into a plurality of paths of signals and extend the signals to I2C buses of slave devices; and configured to judge a current state of data and determine a direction of a current SDA signal, between an SDA signal collected from the I2C bus of the master device and an SDA signal from the I2C bus of the slave device.

Here, the CPLD further comprises: a signal collecting module, a clock distributing module and a direction control module, wherein the signal collecting module is configured to collect the SCL signal and the SDA signal from the I2C bus of the master device using a high-frequency clock signal; the clock distributing module is configured to extend the SCL signal collected from the I2C bus of the master device to SCL signals of I2C buses of multiple subordinate slave devices; and the direction control module is configured to determine the direction of the current SDA signal by judging a current state of data on I2C buses of the master device and the multiple subordinate slave devices.

Here, when the current state of data is SDA_DIR=0, the direction of the current SDA signal is specifically from the master device to the slave device; or, when the current state of data is SDA_DIR=1, the direction of the current SDA signal is specifically from the slave device to the master device.

Here, the CPLD further comprises: a data control module, configured to select the direction of the SDA signal according to a signal of the direction control module.

Here, the CPLD further comprises: a hanging preventing module, configured to distribute a clock to each subordinate slave device during a starting or resetting process of the system to enable each subordinate slave device to release the I2C bus.

To sum up, the control of I2C bus implemented by the CPLD in the embodiment of the present invention belongs to a software implementation; compared with the hardware implementation in the conventional art, the control of I2C bus implemented by the CPLD can be understood as that: an I2C transparent bridge is implemented by the CPLD, and the CPLD also can be called an I2C transparent bridge. The I2C transparent bridge during use is just like being directly connected to a master device; thus, for a user, there is no CPLD; therefore, the CPLD can be regarded as an I2C transparent bridge.

With the embodiment of the present invention, an I2C bus drive chip can be saved, and the manufacturing cost can be reduced. The density of a single-board can be reduced which reduces the design complexity of the single-board. Moreover, the software implementation of the control adopting the CPLD can greatly improve the reliability of controlling the I2C bus, compared with the control implemented by hardware adopted in the conventional art.

The technical solution of the embodiment of the present invention mainly comprises: judging a direction of SDA by a combinational logic circuit in a CPLD based on a change regularity of an I2C time sequence, thereby implementing a transparent bridge function of the I2C. Further, a hanging preventing function of the I2C is provided.

Specifically, the embodiment of the present invention mainly comprises the following contents: an I2C transparent bridge implemented by a CPLD, comprising the modules as follows.

A signal collecting module is configured to collect an SCL signal and an SDA signal of an I2C bus using a high-frequency clock signal, wherein the frequency adopted by the high-frequency clock signal is relative to the frequency of the SCL signal of the I2C bus.

A clock distributing module is configured to extend the SCL signal of a master device on the I2C bus to an SCL signal of each subordinate I2C, wherein the SCL signal of the master refers to an SCL signal of a parent I2C bus.

A direction control module is configured to determine the direction of the SDA signal by judging a current state of data on parent and subordinate I2C buses; namely, judging whether the direction of the SDA signal is a direction of the parent I2C device reading the subordinate I2C device or a direction of the parent I2C device writing the subordinate I2C device.

A data control module is configured to select the direction of the SDA signal according to a signal from the direction control module, that is, SDA_DIR. Here, the selected direction of the SDA signal refers to a direction on a data line. Each SDA signal connected to the CPLD is bidirectional, however, at a certain time point, the direction of the SDA can only be fixed for the CPLD; thus, the CPLD needs to determine whether the SDA signal at this moment is in an input direction or an output direction.

A hanging preventing module is configured to distribute a clock to each subordinate I2C device during a process of resetting the system to enable the subordinate I2C device to release the I2C bus, thereby achieving the purpose of preventing the I2C bus from hanging. That is to say, the hanging preventing module mainly plays a role of resetting. For the resetting, when a single-board is initialized or reset, the CPLD will distribute a clock signal to the SCL of each slave device, so as to release the occupation of the I2C bus by each slave device.

The present invention is illustrated below by examples.

### System embodiment

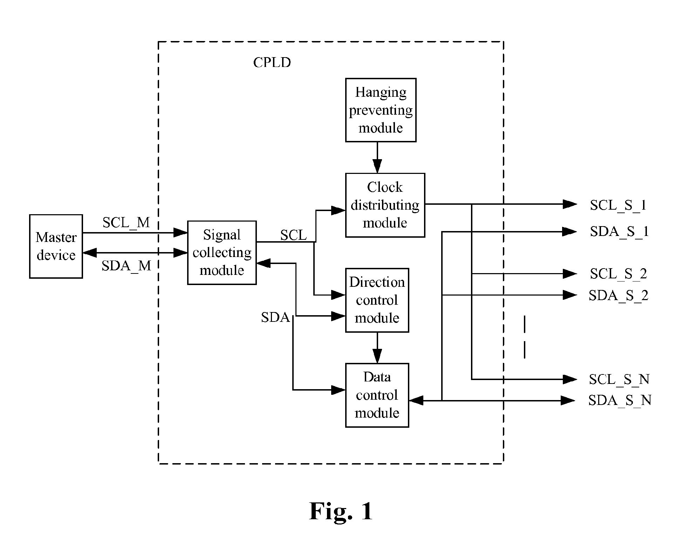

Fig. 1 shows a schematic diagram of the structure in a system embodiment of the present invention. Fig. 1 also can be understood as a structure diagram of an I2C transparent bridge implemented by a CPLD. In Fig. 1, the I2C bus (SCL_M, SDA_M) starting from a master device can be divided into a plurality of I2C buses (SCL_S_1, SDA_S_1; SCL_S_2, SDA_S_2; SCL_S_N, SDA_S_N) after being processed by an I2C transparent bridge of a CPLD. Here, the number of the I2C buses can be selected as actually needed.

In Fig. 1, the CPLD mainly comprises a signal collecting module, a clock distributing module, a direction control module, a data control module and a hanging preventing module. Specific functions of each module are described below respectively.

The signal collecting module is configured to collect the SCL and the SDA of the I2C bus using a high-frequency clock signal, that is, a clock signal relative to the frequency of the SCL signal of the I2C bus. Collecting a low-frequency signal using a high-frequency signal can collect a rising edge and a falling edge on the SCL and SDA lines by judging whether two sampling points have the same level.

The clock distributing module is configured to extend the SCL signal of the master on the I2C bus, that is, the SCL signal of the parent I2C bus, to an SCL of each subordinate I2C. Since the SCL signal is a unidirectional signal transmitted from the master device to the slave device, in the condition that the I2C bus responds normally, the clock distributing module only needs to divide the SCL_M signal of the master device into a plurality of paths of signals and then to distribute the signals to the SCL_S of each slave device.

The direction control module is configured to determine whether the direction of the SDA signal is a direction of the parent I2C device reading the subordinate I2C device or a direction of the parent I2C device writing the subordinate I2C device, by judging a current state of data on the parent and subordinate I2C buses. Here, the state of the I2C bus comprises: START, STOP, READ, WRITE and ACK, etc. The direction of the SDA signal can be represented by a parameter SDA_DIR; when the SDA_DIR is equal to 0, namely, when the master device is to write the slave device, it is indicated that the direction is from the master device to the salve device; when the SDA_DIR is equal to 1, namely, when the master device is to read the slave device, it is indicated that the direction is from the slave device to the master device.

The data control module is configured to select the direction of the SDA signal according to the signal SDA_DIR from the direction control module. For example, when SDA_M of the master device is to write SDA_S_1 of the slave device, SDA_DIR=0, then the direction of the SDA signal is: SDA_M is an output, namely, CPLD I/O pin direction, and SDA_S_1 is an input, namely, CPLD I/O pin direction. When SDA_M of the master device is to read SDA_S_1 of the slave device, SDA_DIR=1, then the direction of the SDA signal is: SDA_M is an input, namely, CPLD I/O pin direction, and SDA_S_1 is an output, namely, CPLD I/O pin direction.

The hanging preventing module is configured to distribute a clock to each subordinate I2C device during a process of resetting the system to enable the subordinate I2C device to release the I2C bus, thereby achieving the purpose of preventing the I2C bus from hanging. When an exception such as the restart of the master device occurs, the system generates a clock and distributes it to the SCL_S of each slave device, thereby completing a time sequence of the I2C of each slave device and enabling the slave device to release the I2C bus. In this way, after the master device is started, the I2C device can be prevented from the hanging caused by a wrong response obtained by scanning the I2C device by the master device.

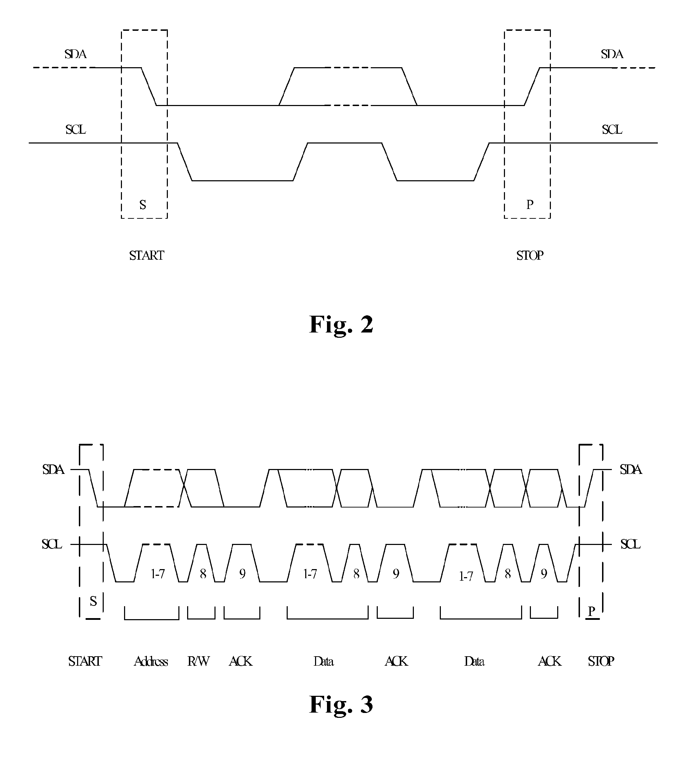

For the control of the I2C bus, since the SCL signal is transmitted only from the master device to the slave device, only a problem of dividing the SCL signal from the master device into a plurality of paths of SCL signals is involved. However, the SDA signal might be transmitted from the master device to the slave device, or from the slave device to the master device; therefore, the direction of the SDA signal must be judged. The START and STOP states of the I2C bus are as shown in Fig. 2; an entire time sequence of the I2C bus is as shown in Fig. 3. In Fig. 3, ACK refers to acknowledgement; R/W refers to READ/WRITE. The WRITE and READ formats of the I2C bus are as shown in Table 1 and Table 2.

Table 1 shows a WRITE format of an I2C bus; Table 2 shows a READ format of an I2C bus.

**Table 1**

| Write Byte Format | | | | | | | | |
|---|---|---|---|---|---|---|---|---|
| S | ADDRESS | WR | ACK | COMMAND | ACK | DATA | ACK | P |
| | 7 bits | | | 8 bits | | 8 bits | | |
| | Slave Address: equivalent to chip-select line of a 3-wire interface | | | Command Byte: selects which register you are writing to | | Data Byte: data goes into the register set by the command byte (to set thresholds, configuration asks, and sampling rate) | | |

**Table 2**

| Read Byte Format | | | | | | | | | | | | | |
|---|---|---|---|---|---|---|---|---|---|---|---|---|---|
| S | ADDRESS | WR | ACK | COMMAND | ACK | S | ADDRESS | RD | ACK | DATA | ACK | /// | P |
| | 7 bits | | | 8 bits | | | 7 bits | | | 8 bits | | | |
| | Slave Address: equivalent to chip-select line | | | Command Byte: selects which register you are reading from | | | Slave Address: repeated due to change in dataflow direction | | | Data Byte: reads from the register set by the command byte | | | |

With the software implementation of CPLD, it is relatively easier to divide an SCL signal of a master device into a plurality of paths of SCL signals; while it is relatively more complex to judge a direction of an SDA signal; therefore, only the direction control module of the embodiment of the present invention for judging the direction of the SDA signal is illustrated below in detail. A specific implementation process of the internal of the direction control module is introduced below in detail, comprising the steps as follows.

Step 1: a default state of SDA_DIR is set to be 0.

Step 2: after a START signal of an I2C bus, a counter C0 is set, and a rising-edge-triggered counting is started for an SCL signal. When counting to 8, if the value of a current SDA signal is 0, it is judged that the I2C bus is in a WRITE process; if the value of a current SDA signal is 1, it is judged that the I2C bus is in a READ process.

Step 3: if the I2C bus is in the WRITE process, when the C0 counts to 9, SDA_SIR is set to be 1, which indicates that the direction of the SDA is from a slave device to a master device, and held for a clock period of SCL, an ACK signal from a transmitting end of the slave device is accepted, then return to SDA_DIR=0, C0=1.

Step 4: if the I2C bus is in the READ process, when detecting a START signal of the I2C bus again, set SDA_DIR=1, a counter C1 is set and a rising-edge-triggered counting is started for an SCL signal, when the C1 counts to 9, SDA_DIR is set to be 0, which indicates the direction of SDA is from a master device to a slave device, and held for a clock period of SCL, an ACK signal from a transmitting end of the master device is accepted, then return to SDA_DIR=1,C1=1.

Step 5: when detecting a STOP signal of the I2C bus, a default state of SDA_DIR is set to be 0 and counters C0 and C1 are cleared to be 0.

A method for controlling an I2C bus comprises the following steps:
Step 101: an SCL signal collected from an I2C bus of a master device is divided into a plurality of paths of signals and the signals are extended to I2C buses of slave devices.
Step 102: a current state of data is judged and a direction of a current SDA signal is determined, between the SDA signal collected from the I2C bus of the master device and the SDA signal from the I2C bus of the slave device.

For the technical solution formed by the above Steps 101 to 102, the collection specifically comprises: a signal collecting module collects the SCL signal and the SDA signal from the I2C bus of the master device using a high-frequency clock signal.

The specific process of Step 101 comprises: a clock distributing module extends the SCL signal collected from the I2C bus of the master device to SCL signals of the I2C buses of multiple subordinate slave devices.

The specific process of Step 102 comprises: a direction control module determines the direction of the current SDA signal by judging a current state of data on I2C buses of the master device and the multiple subordinate slave devices.

When the current state of data is SDA_DIR=0, the direction of the current SDA signal specifically is from the master device to the slave device; or, when the current state of data is SDA_DIR=1, the direction of the current SDA signal specifically is from the slave device to the master device.

Here, besides Step 101 and Step 102, the method further comprises: a hanging preventing module distributes a clock to each subordinate slave device during a starting or resetting process of the system to enable each subordinate slave device to release the I2C bus.

The above are only the preferable embodiments of the present invention, and are not intended to limit the scope of protection of the present invention.

## Claims

1. A system for controlling an Inter-Integrated Circuit (I2C) bus, **characterized by** comprising: a Complex Programmable Logic Device (CPLD), configured to divide a Serial Clock Line (SCL) signal collected from an I2C bus of a master device into a plurality of paths of signals and extend the signals to I2C buses of slave devices; and configured to judge a current state of data and determine a direction of a current Serial Data Line (SDA) signal, between an SDA signal collected from the I2C bus of the master device and an SDA signal from the I2C bus of the slave device.

2. The system according to claim 1, **characterized in that** the CPLD further comprises: a signal collecting module, a clock distributing module and a direction control module, wherein
the signal collecting module is configured to collect the SCL signal and the SDA signal from the I2C bus of the master device using a high-frequency clock signal;
the clock distributing module is configured to extend the SCL signal collected from the I2C bus of the master device to SCL signals of I2C buses of multiple subordinate slave devices; and
the direction control module is configured to determine the direction of the current SDA signal by judging a current state of data on I2C buses of the master device and the multiple subordinate slave devices.

3. The system according to claim 2, **characterized in that** when the current state of data is SDA_DIR=0, the direction of the current SDA signal is from the master device to the slave device;
or, when the current state of data is SDA_DIR=1, the direction of the current SDA signal is from the slave device to the master device.

4. The system according to claim 2 or 3, **characterized in that** the CPLD further comprises: a data control module, configured to select the direction of the SDA signal according to a signal of the direction control module.

5. The system according to claim 4, **characterized in that** the CPLD further comprises: a hanging preventing module, configured to distribute a clock to each subordinate slave device during a starting or resetting process of the system to enable each subordinate slave device to release the I2C bus.

6. A method for controlling an I2C bus, **characterized by** comprising:
dividing an SCL signal collected from an I2C bus of a master device into a plurality of paths of signals and extending the signals to I2C buses of slave devices;
judging a current state of data and determining a direction of a current SDA signal, between an SDA signal collected from the I2C bus of the master device and an SDA signal from the I2C bus of the slave device.

7. The method according to claim 6, **characterized in that** the collection comprises:
collecting, by a signal collecting module, the SCL signal and the SDA signal from the I2C bus of the master device using a high-frequency clock signal.

8. The method according to claim 7, **characterized in that** the step of dividing the SCL signal into a plurality of paths of signals and extending the signals to the I2C buses of the slave devices comprise: extending, by a clock distributing module, the SCL signal collected from the I2C bus of the master device to SCL signals of I2C buses of multiple subordinate slave devices.

9. The method according to claim 8, **characterized in that** the step of judging the current state of data and determining the direction of the current SDA signal, between the SDA signal collected from the I2C bus of the master device and the SDA signal from the I2C bus of the slave device, comprises: determining, by a direction control module, the direction of the current SDA signal by judging a current state of data on I2C buses of the master device and the multiple subordinate slave devices; wherein
when the current state of data is SDA_DIR=0, the direction of the current SDA signal is from the master device to the slave device; or, when the current state of data is SDA_DIR=1, the direction of the current SDA signal is from the slave device to the master device.

10. The method according to any one of claims 6 to 9, **characterized by** further comprising: distributing, by a hanging preventing module, a clock to each subordinate slave device during a starting or resetting process of a system to enable each subordinate slave device to release the I2C bus.
